# EUROPEAN PATENT APPLICATION

(11) **EP 4 610 805 A2**
(43) Date of publication of application: **03.09.2025**
(21) Application number: 25190438.9
(22) Date of filing: 13.02.2024
(51) Int. Cl.: G06F 3/16

(54) **MODIFYING AUDIO DATA ASSOCIATED WITH A SPEAKING USER BASED ON A FIELD OF VIEW OF A LISTENING USER IN AN ARTIFICIAL REALITY ENVIRONMENT**

(30) Priority: 15.03.2023 US 202318122071
(62) Divisional of application: 24157372.4
(71) Applicant: Meta Platforms Technologies, LLC, Menlo Park, CA 94025 (US)
(72) Inventor: Balsam, Nava K., Menlo Park (US); Johnson, Khia, Menlo Park (US); Salehi, Haniyeh, Menlo Park (US); Ananthabhotla, Ishwarya, Menlo Park (US); Ihlefeld, Antje, Menlo Park (US)
(74) Representative: Murgitroyd & Company

(57) **Abstract**

Audio data comprising speech is received at a first client device executing an application in an artificial reality environment, in which the first client device is associated with a speaking user. A determination is then made as to whether an object associated with the speaking user is within a field of view of a listening user of a second client device executing the application. The audio data is modified based at least in part on a set of rules and whether the object associated with the speaking user is within the field of view of the listening user. The modified data is then communicated to the listening user of the second client device.

## Description

### TECHNICAL FIELD

This disclosure relates generally to artificial reality environments, and more specifically to modifying audio data associated with a speaking user based on a field of view of a listening user in an artificial reality environment.

### BACKGROUND

When interacting with other users in an artificial reality environment (e.g., a virtual reality environment or a mixed reality environment), users may speak to each other much like they would in the real world, such that auditory signals weaken and are eventually lost as objects representing the users (e.g., avatars) move away from each other. For example, a group of users in an artificial reality environment may participate in a conversation if their avatars are within a threshold distance of each other in the artificial reality environment. In this example, a user may communicate with other users in the group by saying words or phrases that are detected by a microphone on a client device associated with the user (e.g., a mobile device, a headset, etc.) used to access the artificial reality environment. Continuing with this example, the words or phrases are then sent to client devices associated with the other users and presented to these users (e.g., via one or more speakers on each client device).

Similar to conversations in the real world, users in artificial reality environments may communicate information to each other that they would like to keep private from other users. However, in artificial reality environments, users may not be aware that other users may be able to hear them, which may raise privacy concerns. In the above example, if the users in the group are having a private conversation, they may not be aware that an avatar of another user is close enough to theirs to allow the user to deliberately eavesdrop or inadvertently overhear some or all of their conversation.

### SUMMARY

To address privacy issues concerning audio data communicated between users in artificial reality environments, audio data associated with a speaking user is modified based on a field of view of a listening user in an artificial reality environment.

According to a first aspect, there is provided a method comprising: receiving audio data comprising speech at a first client device executing an application in an artificial reality environment, wherein the first client device is associated with a speaking user; determining whether an object associated with the speaking user is within a field of view of a listening user of a second client device executing the application; modifying the audio data based at least in part on a set of rules and whether the object associated with the speaking user is within the field of view of the listening user; and communicating the modified audio data to the listening user of the second client device.

Modifying the audio data may comprise: responsive to determining the object associated with the speaking user is not within the field of view of the listening user, diminishing the audio data.

Modifying the audio data may comprise: responsive to determining the object associated with the speaking user is within the field of view of the listening user, enhancing the audio data.

Modifying the audio data may comprise: identifying one or more noises included in the audio data; and executing, on the one or more noises included in the audio data, one or more selected from the group consisting of: noise blocking, noise cancelling, noise masking, noise filtering, noise amplification, and noise spatialization.

The set of rules may comprise: enhancing the speech included in the audio data if one or more of: the speaking user is within the field of view of the listening user of the second client device, the speech is associated with a volume that is at least a threshold volume, one or more words associated with safety are included in the speech, a whitelist associated with the speaking user identifies the listening user, an additional object associated with the listening user is within a boundary around the object associated with the speaking user, and a gaze point of the speaking user matches a location of the additional object associated with the listening user.

The gaze point of the speaking user may be determined by the first client device.

The set of rules may comprise: diminishing the speech included in the audio data if one or more of: the speaking user is not within the field of view of the listening user of the second client device, the speech is associated with a volume that is less than a threshold volume, a whitelist associated with the speaking user does not identify the listening user, an additional object associated with the listening user is outside a boundary around the object associated with the speaking user, and a gaze point of the speaking user does not match a location of the additional object associated with the listening user.

Modifying the audio data may comprise: identifying one or more noises included in the audio data; sending a prompt to the second client device to select one or more options from a set of options for modifying each of the one or more noises included in the audio data; receiving, from the second client device, the one or more options for modifying each of the one or more noises included in the audio data; and modifying the audio data based at least in part on the one or more options received from the second client device.

Modifying the audio data may be further based at least in part on one or more selected from the group consisting of: a set of preferences associated with the listening user, a setting associated with the application, and a predicted listening effort of the listening user.

Modifying the audio data may comprise accessing a machine learning model. The machine learning model may be trained to predict a listening effort of the listening user by: receiving a set of attributes associated with a plurality of actions of the listening user, receiving, for each action of the plurality of actions, a label indicating a listening effort of the listening user, and training the machine learning model based at least in part on the set of attributes and the label for each action of the plurality of actions; and applying the machine learning model to a set of attributes associated with an action of the listening user to predict the listening effort of the listening user.

According to a second aspect, there is provided a computer-readable storage medium comprising stored instructions, the instructions when executed by a processor of a device, causing the device to carry out the method of the first aspect. The medium may be non-transitory.

According to a third aspect, there is provided a system comprising one or more processors and a memory comprising stored instructions, the instructions when executed by the one or more processors, cause the one or more processors to carry out the method of the first aspect. The memory may be non-transitory.

According to a fourth aspect, there is provided a computer program product comprising instructions which, when executed by a processor of a device, cause the device to carry out the method of the first aspect.

### BRIEF DESCRIPTION OF THE DRAWINGS

FIG. 1 is a block diagram of a system that includes a client device.
FIG. 2A is a perspective view of a client device implemented as an eyewear device.
FIG. 2B is a perspective view of a client device implemented as a head-mounted display.
FIG. 3 is a block diagram of an audio system.
FIG. 4 is a flowchart of a method for modifying audio data associated with a speaking user based on a set of rules and a field of view of a listening user in an artificial reality environment.
FIGS. 5A-5E illustrate example scenarios described by a set of rules for modifying audio data associated with a speaking user in an artificial reality environment.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Embodiments of the invention may include or be implemented in conjunction with an artificial reality system. Artificial reality is a form of reality that has been adjusted in some manner before presentation to a user, which may include, for example, virtual reality (VR), augmented reality (AR), mixed reality (MR), hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (e.g., stereo video that produces a three-dimensional effect to the viewer). Additionally, in some embodiments, artificial reality may also be associated with applications, products, accessories, services, or some combination thereof, that are used to create content in an artificial reality and/or are otherwise used in an artificial reality. An artificial reality system that provides artificial reality content may be implemented on various platforms, including a wearable device (e.g., a headset) connected to a host computer system, a standalone wearable device (e.g., a headset), a mobile device or computing system, or any other hardware platform capable of providing artificial reality content to one or more viewers.

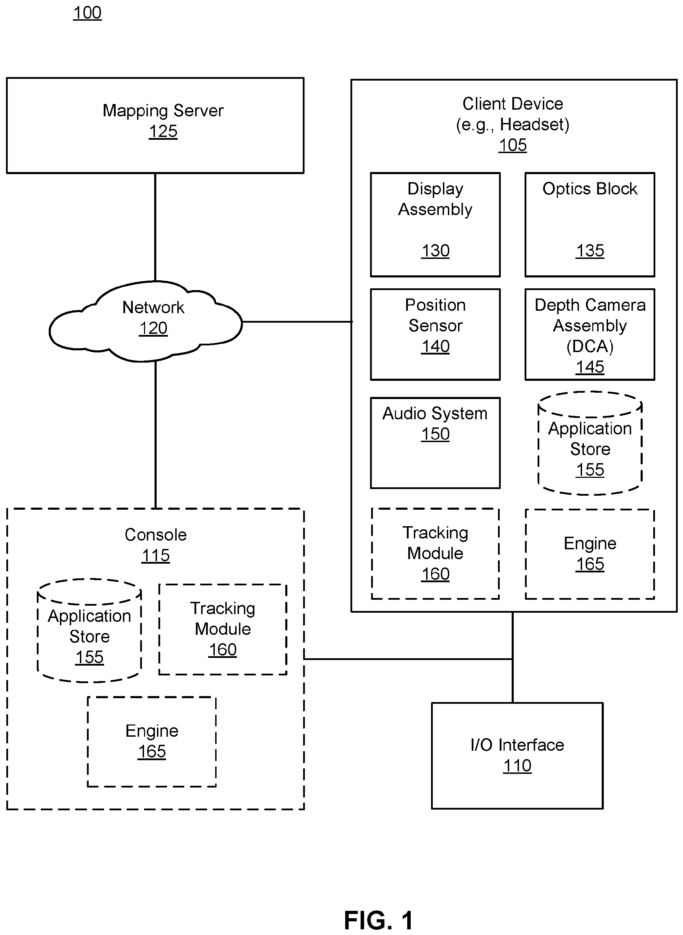

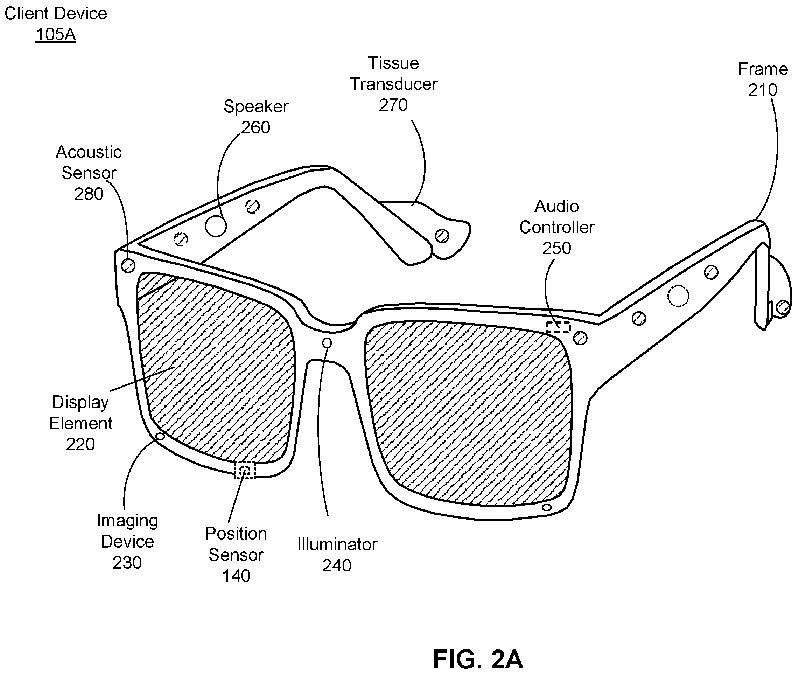

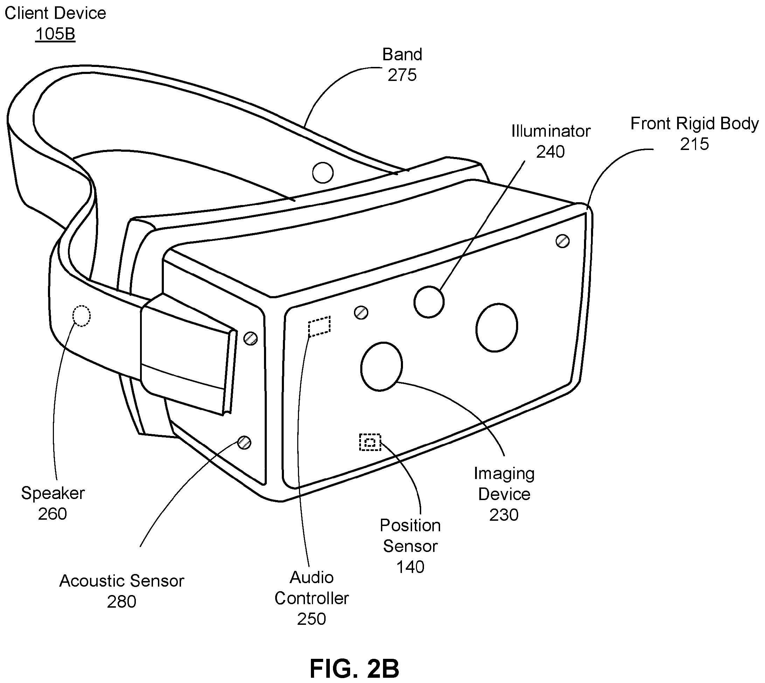

FIG. 1 is a block diagram of a system 100 that includes a client device 105. In some examples, the client device 105 may be the client device 105A of FIG. 2A or the client device 105B of FIG. 2B described below. The system 100 may operate in an artificial reality environment (e.g., a virtual reality environment, an augmented reality environment, a mixed reality environment, or some combination thereof). The system 100 shown in FIG. 1 includes a client device 105 (e.g., a headset), an input/output (I/O) interface 110 that is coupled to a console 115, a network 120, and a mapping server 125. While FIG. 1 shows an example system 100 including one client device 105 and one I/O interface 110, in other examples, any number of these components may be included in the system 100. For example, there may be multiple client devices 105 (e.g., headsets) each having an associated I/O interface 110, with each client device 105 and I/O interface 110 communicating with the console 115. In alternative configurations, different and/or additional components may be included in the system 100. For example, one or more devices (e.g., a fitness monitor, an activity tracker, a smartwatch, a heart rate monitor, a glucose monitor, etc.) may be coupled to the client device 105 in a way that allows the device(s) to communicate with the client device 105 (e.g., via Bluetooth or any other wired and/or wireless communication systems). Additionally, functionality described in conjunction with one or more of the components shown in FIG. 1 may be distributed among the components in a different manner than described in conjunction with FIG. 1 in some examples. For example, some or all of the functionality of the console 115 may be provided by the client device 105.

The client device 105 may be a wearable device (e.g., a headset), a mobile device (e.g., a smartphone or a tablet), a computing system (e.g., a desktop or a laptop computer), or any other device capable of providing artificial reality content to one or more users. As shown in FIG. 1, in some examples, the client device 105 includes a display assembly 130, an optics block 135, one or more position sensors 140, a depth camera assembly (DCA) 145, and an audio system 150. In examples in which some or all of the functionality of the console 115 may be provided by the client device 105, the client device 105 also may include an application store 155, a tracking module 160, and/or an engine 165. Some examples of the client device 105 have different components than those described in conjunction with FIG. 1. Additionally, the functionality provided by various components described in conjunction with FIG. 1 may be differently distributed among the components of the client device 105 in other examples, or be captured in separate assemblies remote from the client device 105.

The display assembly 130 displays content to the user in accordance with data received from the console 115. The display assembly 130 displays the content using one or more display elements. For example, a display element may be an electronic display. In various examples, the display assembly 130 comprises a single display element or multiple display elements (e.g., a display for each eye of a user). Examples of an electronic display include: a liquid crystal display (LCD), an organic light emitting diode (OLED) display, an active-matrix organic light-emitting diode display (AMOLED), a waveguide display, some other display, or some combination thereof. Note in some examples, a display element may also include some or all of the functionality of the optics block 135.

The optics block 135 may magnify image light received from the electronic display, correct optical errors associated with the image light, and present the corrected image light to one or both eyeboxes of the client device 105. The eyebox is a location in space that an eye of a user occupies while using the client device 105. In various examples, the optics block 135 includes one or more optical elements. Example optical elements included in the optics block 135 include: an aperture, a Fresnel lens, a convex lens, a concave lens, a filter, a reflecting surface, or any other suitable optical element that affects image light. Moreover, the optics block 135 may include combinations of different optical elements. In some examples, one or more of the optical elements in the optics block 135 may have one or more coatings, such as partially reflective or anti-reflective coatings.

Magnification and focusing of the image light by the optics block 135 allows the electronic display to be physically smaller, weigh less, and consume less power than larger displays. Additionally, magnification may increase the field of view of the content presented by the electronic display. For example, the field of view of the displayed content is such that the displayed content is presented using almost all (e.g., approximately 110 degrees diagonal), and in some cases, all of the user's field of view. Additionally, in some examples, the amount of magnification may be adjusted by adding or removing optical elements.

In some examples, the optics block 135 may be designed to correct one or more types of optical error. Examples of optical error include barrel or pincushion distortion, longitudinal chromatic aberrations, or transverse chromatic aberrations. Other types of optical errors may further include spherical aberrations, chromatic aberrations, or errors due to the lens field curvature, astigmatisms, or any other type of optical error. In some examples, content provided to the electronic display for display is pre-distorted, and the optics block 135 corrects the distortion when it receives image light from the electronic display generated based on the content.

The position sensor 140 is an electronic device that generates data indicating a position of the client device 105. The position sensor 140 generates one or more measurement signals in response to motion of the client device 105. Examples of a position sensor 140 include: one or more inertial measurement units (IMUs), one or more accelerometers, one or more gyroscopes, one or more magnetometers, another suitable type of sensor that detects motion, or some combination thereof. The position sensor 140 may include multiple accelerometers to measure translational motion (forward/back, up/down, left/right) and multiple gyroscopes to measure rotational motion (e.g., pitch, yaw, roll). In some examples, an IMU rapidly samples the measurement signals and calculates the estimated position of the client device 105 from the sampled data. For example, the IMU integrates the measurement signals received from the accelerometers over time to estimate a velocity vector and integrates the velocity vector over time to determine an estimated position of a reference point on the client device 105. The reference point is a point that may be used to describe the position of the client device 105. While the reference point may generally be defined as a point in space, in practice, the reference point is defined as a point within the client device 105.

The DCA 145 generates depth information for a portion of the local area. The local area is the area surrounding the client device 105. For example, the local area may be a room that a user of the client device 105 is inside, or the user of the client device 105 may be outside and the local area is an outside area. The DCA 145 includes one or more imaging devices and a DCA controller. The DCA 145 may also include an illuminator. As described below, the DCA 145 may include an eye tracking unit that determines eye tracking information. In some examples, using the eye tracking unit, the DCA 145 may determine whether a gaze point of a user of the client device 105 matches a location of an object in an artificial reality environment. In such examples, the DCA 145 may determine the gaze point of the user based on one or more gaze lines for the eye(s) of the user. The DCA 145 may determine a gaze line for an eye based on a position and an orientation of the eye. For example, the DCA 145 may determine that a gaze line for an eye of a user extends from the center of the eyeball, through the center of the pupil, and away from the user. The DCA 145 may then use the gaze line(s) to determine the gaze point of the user. For example, the DCA 145 may determine that a gaze point of a user corresponds to a point in space at which gaze lines for the user's eyes intersect. In this example, the DCA 145 may then determine whether the gaze point of the user matches a location of an object in an artificial reality environment. Operation and structure of the DCA 145 is further described below with regard to FIG. 2A.

The audio system 150 provides audio content to a user of the client device 105. The audio system 150 may comprise one or more acoustic sensors, one or more transducers, and an audio controller. The audio system 150 may provide spatialized audio content to the user. In some examples, the audio system 150 may request acoustic parameters from the mapping server 125 over the network 120. The acoustic parameters describe one or more acoustic properties (e.g., room impulse response, a reverberation time, a reverberation level, etc.) describing at least a portion of the local area (e.g., from the DCA 145 and/or location information for the client device 105 from the position sensor 140). The audio system 150 may generate one or more sound filters using one or more of the acoustic parameters received from the mapping server 125, and use the sound filters to provide audio content to the user.

The I/O interface 110 is a device that allows a user to send action requests and receive responses from the console 115. An action request is a request to perform a particular action. For example, an action request may be an instruction to start or end capture of image or video data, or an instruction to perform a particular action within an application. The I/O interface 110 may include one or more input devices. Example input devices include: a keyboard, a mouse, a game controller, or any other suitable device for receiving action requests and communicating the action requests to the console 115. An action request received by the I/O interface 110 is communicated to the console 115, which performs an action corresponding to the action request. In some examples, the I/O interface 110 includes an IMU that captures calibration data indicating an estimated position of the I/O interface 110 relative to an initial position of the I/O interface 110. In some examples, the I/O interface 110 may provide haptic feedback to the user in accordance with instructions received from the console 115. For example, haptic feedback is provided when an action request is received, or the console 115 communicates instructions to the I/O interface 110 causing the I/O interface 110 to generate haptic feedback when the console 115 performs an action.

The console 115 provides content to the client device 105 for processing in accordance with information received from one or more of: the DCA 145, the client device 105, and the I/O interface 110. In the example shown in FIG. 1, the console 115 includes the application store 155, the tracking module 160, and the engine 165. Some examples of the console 115 have different modules or components than those described in conjunction with FIG. 1. Similarly, the functions further described below may be distributed among components of the console 115 in a different manner than described in conjunction with FIG. 1. In some examples, the functionality discussed herein with respect to the console 115 may be implemented in the client device 105 or a remote system.

The application store 155 stores one or more applications for execution by the console 115. An application is a group of instructions that, when executed by a processor, generates content for presentation to the user. Content generated by an application may be in response to inputs received from the user via movement of the client device 105 or the I/O interface 110. Examples of applications include: gaming applications, conferencing applications, video playback applications, or other suitable applications. In some examples, the application store 155 also may store information describing a setting associated with an application. A setting associated with an application may be associated with a set of customs, practices, etc. For example, a game application may be associated with a social setting, which is less formal than a business setting that may be associated with a conferencing application.

The tracking module 160 tracks movements of the client device 105 or of the I/O interface 110 using information from the DCA 145, the one or more position sensors 140, or some combination thereof. For example, the tracking module 160 determines a position of a reference point of the client device 105 in a mapping of a local area based on information from the client device 105. The tracking module 160 may also determine positions of an object or a virtual object. Additionally, in some examples, the tracking module 160 may use portions of data indicating a position of the client device 105 from the position sensor 140 as well as representations of the local area from the DCA 145 to predict a future location of the client device 105. The tracking module 160 provides the estimated or predicted future position of the client device 105 or the I/O interface 110 to the engine 165.

In some examples, the tracking module 160 may determine whether an object associated with a user is within a field of view of another user. In some examples, this determination may be made based on a location and/or an orientation of one or more objects associated with the users. For example, the tracking module 160 may determine a location of a first virtual object corresponding to an avatar associated with a speaking user and a location and an orientation of a second virtual object corresponding to an avatar associated with a listening user in an artificial reality environment. In this example, the tracking module 160 may then determine that the avatar associated with the speaking user is within the field of view of the listening user if the avatar associated with the speaking user is within a threshold distance of the avatar associated with the listening user and/or within a threshold number of degrees of a direction that the head of the avatar associated with the listening user is facing (e.g., 110 degrees diagonal). Alternatively, in the above example, the tracking module 160 may determine that the avatar associated with the speaking user is not within the field of view of the listening user if the avatar associated with the speaking user is not within the threshold distance of the avatar associated with the listening user or that the avatar associated with the speaking user is not within the threshold number of degrees of the direction that the head of the avatar associated with the listening user is facing.

In various examples, the tracking module 160 also may determine whether an object associated with a user is within a boundary around an object associated with another user. In some examples, the boundary may correspond to a threshold radius of an object associated with a user. For example, the tracking module 160 may determine a location of a first virtual object corresponding to an avatar associated with a speaking user and a location of a second virtual object corresponding to an avatar associated with a listening user in an artificial reality environment. In this example, the tracking module 160 may determine a distance between the avatars and compare the distance to a threshold radius of the avatar associated with the speaking user, in which the threshold radius corresponds to a boundary around the avatar. Continuing with this example, the tracking module 160 may determine that the avatar associated with the listening user is within the boundary around the avatar associated with the speaking user if the distance is less than the threshold radius. Alternatively, in the above example, the tracking module 160 may determine that the avatar associated with the listening user is outside the boundary around the avatar associated with the speaking user if the distance is greater than the threshold radius.

The engine 165 executes applications and receives position information, acceleration information, velocity information, predicted future positions, or some combination thereof, of the client device 105 from the tracking module 160. Based on the received information, the engine 165 determines content to provide to the client device 105 for presentation to the user. For example, if the received information indicates that the user has looked to the left, the engine 165 generates content for the client device 105 that mirrors the user's movement in a virtual local area or in a local area augmenting the local area with additional content. Additionally, the engine 165 performs an action within an application executing on the console 115 in response to an action request received from the I/O interface 110 and provides feedback to the user that the action was performed. The provided feedback may be visual or audible feedback via the client device 105 or haptic feedback via the I/O interface 110.

The network 120 couples the client device 105 and/or the console 115 to the mapping server 125. The network 120 may include any combination of local area and/or wide area networks using both wireless and/or wired communication systems. For example, the network 120 may include the Internet, as well as mobile telephone networks. In one example, the network 120 uses standard communications technologies and/or protocols. Hence, the network 120 may include links using technologies such as Ethernet, 802.11, worldwide interoperability for microwave access (WiMAX), 2G/3G/4G mobile communications protocols, digital subscriber line (DSL), asynchronous transfer mode (ATM), InfiniBand, PCI Express Advanced Switching, etc. Similarly, the networking protocols used on the network 120 may include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 120 may be represented using technologies and/or formats including image data in binary form (e.g. Portable Network Graphics (PNG)), hypertext markup language (HTML), extensible markup language (XML), etc. In addition, all or some of the links may be encrypted using conventional encryption technologies such as secure sockets layer (SSL), transport layer security (TLS), virtual private networks (VPNs), Internet Protocol security (IPsec), etc.

The mapping server 125 may include a database that stores a virtual model describing a plurality of spaces, wherein one location in the virtual model corresponds to a current configuration of a local area of the client device 105. The mapping server 125 receives, from the client device 105 via the network 120, information describing at least a portion of the local area and/or location information for the local area. The user may adjust privacy settings to allow or prevent the client device 105 from transmitting information to the mapping server 125. The mapping server 125 determines, based on the received information and/or location information, a location in the virtual model that is associated with the local area of the client device 105. The mapping server 125 determines (e.g., retrieves) one or more acoustic parameters associated with the local area, based in part on the determined location in the virtual model and any acoustic parameters associated with the determined location. The mapping server 125 may transmit the location of the local area and any values of acoustic parameters associated with the local area to the client device 105.

One or more components of the system 100 may contain a privacy module that stores one or more privacy settings for user data elements. The user data elements describe the user or the client device 105. For example, the user data elements may describe a physical characteristic of the user, an action performed by the user, a location of the user of the client device 105, a location of the client device 105, a head-related transfer function (HRTF) for the user (described below), etc. Privacy settings (or "access settings") for a user data element may be stored in any suitable manner, such as, for example, in association with the user data element, in an index on an authorization server, in another suitable manner, or any suitable combination thereof.

A privacy setting for a user data element specifies how the user data element (or particular information associated with the user data element) may be accessed, stored, or otherwise used (e.g., viewed, shared, modified, copied, executed, surfaced, or identified). In some examples, the privacy settings for a user data element may specify a "blocked list" of entities that may not access certain information associated with the user data element. The privacy settings associated with the user data element may specify any suitable granularity of permitted access or denial of access. For example, some entities may have permission to see that a specific user data element exists, some entities may have permission to view the content of the specific user data element, and some entities may have permission to modify the specific user data element. The privacy settings may allow the user to allow other entities to access or store user data elements for a finite period of time.

The privacy settings may allow a user to specify one or more geographic locations from which user data elements may be accessed. Access or denial of access to the user data elements may depend on the geographic location of an entity who is attempting to access the user data elements. For example, the user may allow access to a user data element and specify that the user data element is accessible to an entity only while the user is in a particular location. If the user leaves the particular location, the user data element may no longer be accessible to the entity. As another example, the user may specify that a user data element is accessible only to entities within a threshold distance from the user, such as another user of a client device 105 within the same local area as the user. If the user subsequently changes location, the entity with access to the user data element may lose access, while a new group of entities may gain access as they come within the threshold distance of the user.

The system 100 may include one or more authorization/privacy servers for enforcing privacy settings. A request from an entity for a particular user data element may identify the entity associated with the request and the user data element may be sent only to the entity if the authorization server determines that the entity is authorized to access the user data element based on the privacy settings associated with the user data element. If the requesting entity is not authorized to access the user data element, the authorization server may prevent the requested user data element from being retrieved or may prevent the requested user data element from being sent to the entity. Although this disclosure describes enforcing privacy settings in a particular manner, this disclosure contemplates enforcing privacy settings in any suitable manner.

FIG. 2A is a perspective view of a client device 105A implemented as an eyewear device. In some examples, the eyewear device is a near eye display (NED). In general, the client device 105A may be worn on the face of a user such that content (e.g., media content) is presented using the display assembly 130 and/or the audio system 150. However, the client device 105A may also be used such that media content is presented to a user in a different manner. Examples of media content presented by the client device 105A include one or more images, video, audio, or some combination thereof. The client device 105A includes a frame 210, and may include, among other components, the display assembly 130 including one or more display elements 220, the DCA 145, the audio system 150, and the position sensor 140. While FIG. 2A illustrates the components of the client device 105A in example locations on the client device 105A, the components may be located elsewhere on the client device 105A, on a peripheral device paired with the client device 105A, or some combination thereof. Similarly, there may be more or fewer components on the client device 105A than what is shown in FIG. 2A.

The frame 210 holds the other components of the client device 105A. The frame 210 includes a front portion that holds the one or more display elements 220 and end pieces (e.g., temples) that attach to a head of the user. The front portion of the frame 210 bridges the top of a nose of the user. The length of the end pieces may be adjustable (e.g., adjustable temple length) to fit different users. The end pieces may also include a portion that curls behind the ear of the user (e.g., a temple tip, an ear piece, etc.).

The one or more display elements 220 provide light to a user wearing the client device 105A. As illustrated, the client device 105A includes a display element 220 for each eye of a user. In some examples, a display element 220 generates image light that is provided to an eyebox of the client device 105A. For example, a display element 220 may be a waveguide display. A waveguide display includes a light source (e.g., a two-dimensional source, one or more line sources, one or more point sources, etc.) and one or more waveguides. Light from the light source is in-coupled into the one or more waveguides, which outputs the light in a manner such that there is pupil replication in an eyebox of the client device 105A. In-coupling and/or out-coupling of light from the one or more waveguides may be done using one or more diffraction gratings. In some examples, the waveguide display includes a scanning element (e.g., a waveguide, a mirror, etc.) that scans light from the light source as it is in-coupled into the one or more waveguides. Note that in some examples, one or both of the display elements 220 are opaque and do not transmit light from a local area around the client device 105A. In this context, the client device 105A generates VR content. Alternatively, in some examples, one or both of the display elements 220 are at least partially transparent, such that light from the local area may be combined with light from the one or more display elements 220 to produce AR and/or MR content.

In some examples, a display element 220 does not generate image light, and instead is a lens that transmits light from the local area to the eyebox. For example, one or both of the display elements 220 may be a lens without correction (non-prescription) or a prescription lens (e.g., single vision, bifocal, trifocal, or progressive) to help correct for defects in a user's eyesight. In some examples, the display element 220 may be polarized and/or tinted to protect the user's eyes from the sun.

In some examples, the display element 220 may include an additional optics block 135 (not shown). The optics block 135 may include one or more optical elements (e.g., lens, Fresnel lens, etc.) that direct light from the display element 220 to the eyebox. For example, the optics block 135 may correct for aberrations in some or all of the image content, magnify some or all of the image, or some combination thereof.

The DCA 145 determines depth information for a portion of a local area surrounding the client device 105A. The DCA 145 includes one or more imaging devices 230 and a DCA controller (not shown in FIG. 2A), and may also include an illuminator 240. In some examples, the illuminator 240 illuminates a portion of the local area with light. For example, the light may be structured light (e.g., a dot pattern, bars, etc.) in the infrared (IR), IR flash for time-of-flight, etc. In some examples, the one or more imaging devices 230 capture images of the portion of the local area that include the light from the illuminator 240. As illustrated, FIG. 2A shows a single illuminator 240 and two imaging devices 230. In alternate examples, there is no illuminator 240 and at least two imaging devices 230.

The DCA controller computes depth information for the portion of the local area using the captured images and one or more depth determination techniques. For example, the depth determination technique may be direct time-of-flight (ToF) depth sensing, indirect ToF depth sensing, structured light, passive stereo analysis, active stereo analysis (uses texture added to the scene by light from the illuminator 240), some other technique to determine depth of a scene, or some combination thereof.

The DCA 145 may include an eye tracking unit that determines eye tracking information. The eye tracking information may comprise information about a position and an orientation of one or both eyes (within their respective eyeboxes). The eye tracking unit may include one or more cameras. The eye tracking unit estimates an angular orientation of one or both eyes based on images captured of one or both eyes by the one or more cameras. In some examples, the eye tracking unit may also include one or more illuminators 240 that illuminate one or both eyes with an illumination pattern (e.g., structured light, glints, etc.). The eye tracking unit may use the illumination pattern in the captured images to determine the eye tracking information. The client device 105A may prompt the user to opt in to allow operation of the eye tracking unit. For example, by opting in, the client device 105A may detect and/or store images of the user's eye(s) or any eye tracking information of the user.

The audio system 150 provides audio content. The audio system 150 includes a transducer array, a sensor array, and an audio controller 250. However, in other examples, the audio system 150 may include different and/or additional components. Similarly, in some cases, functionality described with reference to the components of the audio system 150 may be distributed among the components in a different manner than is described here. For example, some or all of the functions of the audio controller 250 may be performed by a remote server.

The transducer array presents sound to a user. The transducer array includes a plurality of transducers. A transducer may be a speaker 260 or a tissue transducer 270 (e.g., a bone conduction transducer or a cartilage conduction transducer). Although the speakers 260 are shown exterior to the frame 210, the speakers 260 may be enclosed in the frame 210. In some examples, instead of individual speakers 260 for each ear, the client device 105A includes a speaker array comprising multiple speakers 260 integrated into the frame 210 to improve directionality of presented audio content. The tissue transducer 270 couples to the head of the user and directly vibrates tissue (e.g., bone or cartilage) of the user to generate sound. The number and/or locations of transducers may be different from what is shown in FIG. 2A.

The sensor array detects sounds within the local area of the client device 105A. The sensor array includes a plurality of acoustic sensors 280. An acoustic sensor 280 captures sounds emitted from one or more sound sources in the local area (e.g., a room). Each acoustic sensor 280 is configured to detect sound and convert the detected sound into an electronic format (analog or digital). The acoustic sensors 280 may be acoustic wave sensors, microphones, sound transducers, or similar sensors that are suitable for detecting sounds.

In some examples, one or more acoustic sensors 280 may be placed in an ear canal of each ear (e.g., acting as binaural microphones). In some examples, the acoustic sensors 280 may be placed on an exterior surface of the client device 105A, placed on an interior surface of the client device 105A, separate from the client device 105A (e.g., part of some other device), or some combination thereof. The number and/or locations of acoustic sensors 280 may be different from what is shown in FIG. 2A. For example, the number of acoustic detection locations may be increased to increase the amount of audio information collected and the sensitivity and/or accuracy of the information. The acoustic detection locations may be oriented such that the acoustic sensors 280 are able to detect sounds in a wide range of directions surrounding the user wearing the client device 105A.

The audio controller 250 processes information from the sensor array that describes sounds detected by the sensor array. The audio controller 250 may comprise a processor and a computer-readable storage medium. The audio controller 250 may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers 260, or some combination thereof.

The position sensor 140 generates one or more measurement signals in response to motion of the client device 105A. The position sensor 140 may be located on a portion of the frame 210 of the client device 105A. The position sensor 140 may include an IMU. Examples of position sensor 140 include: one or more accelerometers, one or more gyroscopes, one or more magnetometers, another suitable type of sensor that detects motion, a type of sensor used for error correction of the IMU, or some combination thereof. The position sensor 140 may be located external to the IMU, internal to the IMU, or some combination thereof.

In some examples, the client device 105A may provide for simultaneous localization and mapping (SLAM) for a position of the client device 105A and updating of a model of the local area. For example, the client device 105A may include a passive camera assembly (PCA) that generates color image data. The PCA may include one or more RGB cameras that capture images of some or all of the local area. In some examples, some or all of the imaging devices 230 of the DCA 145 may also function as the PCA. The images captured by the PCA and the depth information determined by the DCA 145 may be used to determine parameters of the local area, generate a model of the local area, update a model of the local area, or some combination thereof. Furthermore, the position sensor 140 tracks the position (e.g., location and pose) of the client device 105A within the room.

FIG. 2B is a perspective view of a client device 105B implemented as a head-mounted display (HMD). In examples that describe an AR system and/or a MR system, portions of a front side of the HMD are at least partially transparent in the visible band (~380 nm to 750 nm), and portions of the HMD that are between the front side of the HMD and an eye of the user are at least partially transparent (e.g., a partially transparent electronic display). The HMD includes a front rigid body 215 and a band 275. The client device 105B includes many of the same components described above with reference to FIG. 2A, but modified to integrate with the HMD form factor. For example, the HMD includes the display assembly 130, the DCA 145, the audio system 150, and the position sensor 140. FIG. 2B shows the illuminator 240, a plurality of the speakers 260, a plurality of the imaging devices 230, a plurality of acoustic sensors 280, and the position sensor 140. The speakers 260 may be located in various locations, such as coupled to the band 275 (as shown), coupled to front rigid body 215, or may be configured to be inserted within the ear canal of a user.

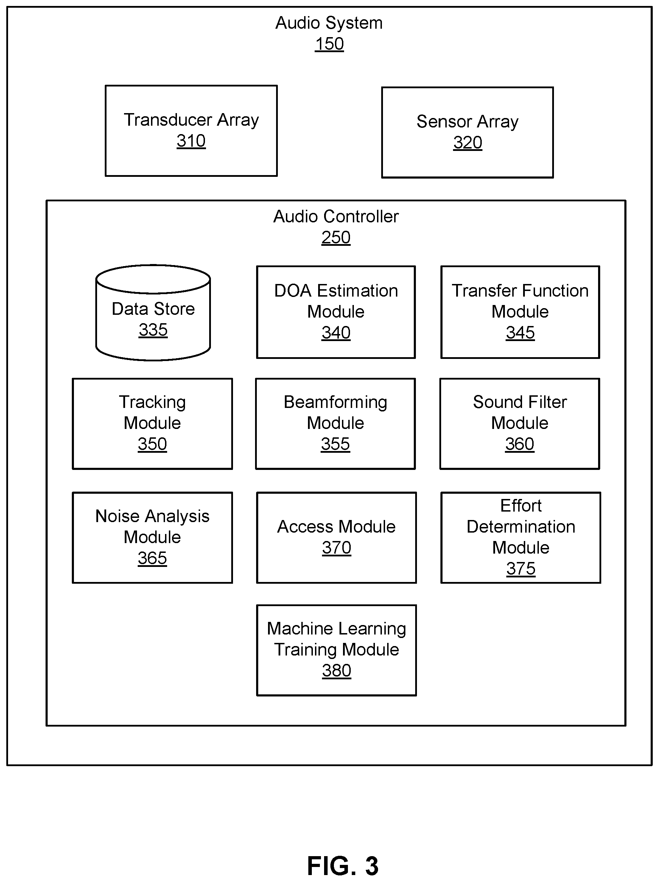

FIG. 3 is a block diagram of an audio system 150. The audio system 150 in FIG. 2A or FIG. 2B may be an example of the audio system 150 shown in FIG. 3. The audio system 150 generates one or more acoustic transfer functions for a user. The audio system 150 may then use the acoustic transfer function(s) to generate audio content for the user. In the example of FIG. 3, the audio system 150 includes a transducer array 310, a sensor array 320, and the audio controller 250. Some examples of the audio system 150 include different components than those described here. Similarly, in some examples, functions may be distributed among the components in a different manner than is described here.

The transducer array 310 is configured to communicate audio content to a user. The transducer array 310 includes a plurality of transducers. A transducer is a device that provides audio content. For example, a transducer may be a speaker 260, a tissue transducer 270, some other device that provides audio content, or some combination thereof. A tissue transducer 270 may be configured to function as a bone conduction transducer or a cartilage conduction transducer. The transducer array 310 may communicate audio content via air conduction (e.g., via one or more speakers 260), via bone conduction (via one or more bone conduction transducers), via a cartilage conduction audio system (via one or more cartilage conduction transducers), or some combination thereof. In some examples, the transducer array 310 may include one or more transducers to cover different parts of a frequency range. For example, a piezoelectric transducer may be used to cover a first part of a frequency range and a moving coil transducer may be used to cover a second part of a frequency range.

The bone conduction transducers generate acoustic pressure waves by vibrating bone/tissue in the user's head. A bone conduction transducer may be coupled to a portion of a client device 105, and may be configured to be behind the auricle coupled to a portion of the user's skull. The bone conduction transducer receives vibration instructions from the audio controller 250, and vibrates a portion of the user's skull based on the received instructions. The vibrations from the bone conduction transducer generate a tissue-borne acoustic pressure wave that propagates toward the user's cochlea, bypassing the eardrum.

The cartilage conduction transducers generate acoustic pressure waves by vibrating one or more portions of the auricular cartilage of the ears of the user. A cartilage conduction transducer may be coupled to a portion of a client device 105, and may be configured to be coupled to one or more portions of the auricular cartilage of the ear. For example, the cartilage conduction transducer may couple to the back of an auricle of the ear of the user. The cartilage conduction transducer may be located anywhere along the auricular cartilage around the outer ear (e.g., the pinna, the tragus, some other portion of the auricular cartilage, or some combination thereof). Vibrating the one or more portions of auricular cartilage may generate airborne acoustic pressure waves outside the ear canal, tissue-borne acoustic pressure waves that cause some portions of the ear canal to vibrate and thereby generate an airborne acoustic pressure wave within the ear canal, or some combination thereof. The generated airborne acoustic pressure waves propagate down the ear canal toward the ear drum.

The transducer array 310 generates audio content in accordance with instructions from the audio controller 250. In some examples, the audio content is spatialized. Spatialized audio content is audio content that appears to originate from a particular direction and/or a target region (e.g., an object in the local area and/or a virtual object). For example, spatialized audio content may make it appear as though sound is originating from a virtual singer across a room from the user. The transducer array 310 may be coupled to a wearable device (e.g., a headset). In alternative examples, the transducer array 310 may be a plurality of speakers 260 that are separate from the wearable device (e.g., coupled to an external console 115).

The sensor array 320 detects sounds within a local area surrounding the sensor array 320. The sensor array 320 may include a plurality of acoustic sensors 280 that each detect air pressure variations of a sound wave and convert the detected sounds into an electronic format (analog or digital). The plurality of acoustic sensors 280 may be positioned on a client device 105, (e.g., a headset) on a user (e.g., in an ear canal of the user), on a neckband, or some combination thereof. For example, an acoustic sensor 280 may be a microphone, a vibration sensor, an accelerometer, or any combination thereof. In some examples, the sensor array 320 is configured to monitor the audio content generated by the transducer array 310 using at least some of the plurality of acoustic sensors 280. Increasing the number of sensors may improve the accuracy of information (e.g., directionality) describing a sound field produced by the transducer array 310 and/or sound from the local area.

The audio controller 250 controls operation of the audio system 150. The audio controller 250 may modify audio data (e.g., by enhancing it, diminishing it, etc.) using various techniques. Examples of such techniques include: blocking, cancelling, masking, filtering, amplifying, spatializing, or using any other suitable technique or combination of techniques. For example, to enhance audio data, the audio data may be amplified and/or its spatialization may be changed so that it appears to originate from a region closer to a listening user. In this example, the audio data also may be enhanced by diminishing other audio data. As an additional example, to diminish audio data, the audio data may be filtered out, masked, blocked, cancelled, or its spatialization may be changed so that it appears to originate from a region further from a listening user. In some examples, audio data also may be modified by executing instructions for noise blocking, noise cancelling, noise masking, noise filtering, noise amplification, noise spatialization, etc. on one or more noises included in the audio data. For example, if audio data includes noises such as speech and traffic noise, the audio data may be modified by enhancing the speech. In this example, the speech may be enhanced by amplifying it, by changing its spatialization so that it appears to originate from a region closer to a listening user, and/or by diminishing the traffic noise. In the above example, the traffic noise may be diminished by filtering it out, masking it, blocking it, cancelling it, and/or changing its spatialization so that it appears to originate from a region further from the listening user.

In the example of FIG. 3, the audio controller 250 includes a data store 335, a DOA estimation module 340, a transfer function module 345, a tracking module 350, a beamforming module 355, a sound filter module 360, a noise analysis module 365, an access module 370, an effort determination module 375, and a machine learning training module 380. The audio controller 250 may be located inside a client device 105 (e.g., a headset), in some examples. In some examples, the audio controller 250 may have different components than those described here. Similarly, functions may be distributed among the components in a different manner than described here. For example, some functions of the audio controller 250 may be performed external to a client device 105. The user may opt in to allow the audio controller 250 to transmit data captured by a client device 105 to systems external to the client device 105, and the user may select privacy settings controlling access to any such data.

The data store 335 stores data for use by the audio system 150. Data in the data store 335 may include sounds recorded in the local area of the audio system 150, audio content, head-related transfer functions (HRTFs), transfer functions for one or more sensors, array transfer functions (ATFs) for one or more of the acoustic sensors 280, sound source locations, a virtual model of the local area, direction of arrival estimates, sound filters, and any other suitable data that may be used by the audio system 150, or any combination thereof. In some examples, the data store 335 also may store information identifying noises (e.g., speech, music, ambient noise, etc.). Information identifying a noise stored in the data store 335 may include various characteristics of noises, such as their amplitudes, frequencies, wavelengths, whether they are continuous or intermittent, or any other suitable characteristics. In various examples, the data store 335 also may store one or more machine learning model(s).

In some examples, the data store 335 also may store data identifying one or more users who are permitted to receive and/or prohibited from receiving audio data associated with a user. In some examples, the data is stored in one or more lists. For example, the data store 335 may include a whitelist associated with a user that identifies other users permitted to receive audio data associated with the user. In this example, the whitelist also may include one or more safe words, such that all users in an artificial reality environment are permitted to receive the audio data if the audio data includes speech and the speech includes any of the safe word(s). As an additional example, the data store 335 may include a blocked list associated with a user that identifies other users prohibited from receiving audio data associated with the user. Information identifying a user stored in the data store 335 may correspond to a username, an email address, a mobile phone number, or any other unique identifier or combination of identifiers that uniquely identifies the user.

In various examples, the data store 335 also may store a set of rules that may be accessed by other components of the audio system 150. In such examples, the set of rules may describe how and when audio data should be modified (e.g., by enhancing or diminishing it, by enhancing or diminishing one or more noises included in it, etc.) based on various factors. Examples of such factors include: a field of view of a user, whether a user is permitted to receive or prohibited from receiving the audio data (e.g., based on the content of speech included in the audio data, a whitelist associated with the audio data, and/or a blocked list associated with the audio data), a volume of a noise included in the audio data, etc. For example, the set of rules may indicate that audio data associated with a speaking user or speech included in the audio data should be enhanced for a listening user if an object associated with the speaking user is within the field of view of the listening user or if a whitelist associated with the speaking user identifies the listening user. In this example, the set of rules also may indicate that the audio data/speech should be enhanced for the listening user if the audio data/speech is associated with a volume that is at least a threshold volume and/or one or more safe words, such as words associated with safety (e.g., "dangerous"), are included in the speech. In the above example, the set of rules also may indicate that the audio data/speech should be diminished for the listening user if the object associated with the speaking user is not within the field of view of the listening user, if the whitelist associated with the speaking user does not identify the listening user, or if a blocked list associated with the speaking user identifies the listening user. In this example, the set of rules also may indicate that the audio data/speech should be diminished if the audio data/speech is associated with a volume that is less than the threshold volume or if the speech does not include any safe words.

In some examples, the set of rules also may describe how and when audio data should be modified based on additional factors. Examples of such factors include: a boundary associated with a user, a gaze point of a user, a setting associated with an application, a listening effort of a user, etc. For example, the set of rules may indicate that audio data associated with a speaking user or speech included in the audio data should be enhanced for a listening user if an object associated with the listening user is within a boundary around an object associated with the speaking user and/or a gaze point of the speaking user matches a location of the object associated with the listening user. In this example, the set of rules also may indicate that the audio data/speech should be diminished for the listening user if the object associated with the listening user is outside the boundary around the object associated with the speaking user and/or the gaze point of the speaking user does not match the location of the object associated with the listening user. As an additional example, the set of rules may indicate that in a social setting associated with an application, audio data or noises included in audio data originating from outside a boundary around a speaking user should be diminished for a listening user. As yet another example, the set of rules may indicate that audio data or speech included in the audio data should be enhanced for a user in proportion to a listening effort of the user. In the above example, the set of rules also or alternatively may indicate that other audio data or noises other than speech included in the audio data should be diminished in proportion to the listening effort of the user.

In various examples, the set of rules stored in the data store 335 also may describe how and when audio data should be modified based on information describing a physical characteristic (e.g., an age, a hearing impairment, etc.) and/or a mental state (e.g., a mood, a stress level, etc.) associated with a user. For example, the set of rules may indicate that if a user has a hearing impairment or is at least a threshold age, audio data or a noise included in the audio data (e.g., speech) may be enhanced for the user (e.g., by amplifying it and/or changing its spatialization so that it appears to originate from a region closer to the user, by diminishing other audio data or other noises included in the audio data, etc.). Information describing a physical characteristic or a mental state associated with a user may be received from the user via manual input (e.g., via the I/O interface 110). In some examples, this information may be determined or inferred based on one or more biomarkers (e.g., blood oxygen level, glucose level, etc.), physiological responses (e.g., pupillary response), vital signs (e.g., body temperature, pulse), etc. associated with a user (e.g., using machine learning). For example, the set of rules may indicate that if a user likely has a high stress level (e.g., based on a pulse that is at least a threshold rate for at least a threshold amount of time and a normal body temperature), audio data may be enhanced for the user using any technique or combination of techniques other than amplification. In examples in which information about a physical characteristic or a mental state associated with a user is determined or inferred, the determination/inference and/or information about the user used to make the determination/inference may be received from one or more sources. Examples of such sources include: the DCA 145, one or more devices coupled to the client device 105 (e.g., a fitness monitor, an activity tracker, a smartwatch, a heart rate monitor, or a glucose monitor), etc.

In some examples, the data store 335 also may store a set of preferences associated with a user that may be accessed by other components of the audio system 150. In such examples, the set of preferences may describe how and when audio data should be modified (e.g., by enhancing or diminishing it). For example, the set of preferences may indicate that speech included in audio data should be enhanced between 9:00 AM and 5:00 PM on weekdays or anytime a user is in a business setting and that ambient noises included in audio data should be diminished during the same time and in the same setting. In examples in which the data store 335 includes a set of preferences associated with a user, one or more of the preferences may be received from the user. For example, a prompt may be sent to a user of the client device 105 (e.g., via the display assembly 130) to select one or more options from a set of options for modifying audio data. In the above example, options may be received from the user (e.g., via a selection action, such as drag-and-drop using an input device included in the I/O interface 110) to amplify or change the spatialization of the audio data and/or certain noises (e.g., speech) included in the audio data, such that the audio data/noises appear to originate from different regions and to block, cancel, or filter out other audio data/noises (e.g., ambient noises). In this example, upon receiving the options, the options may be included among a set of preferences associated with the user stored in the data store 335. Continuing with this example, the set of preferences may be updated upon receiving one or more additional options from the user.

In examples in which the data store 335 includes a set of rules and/or a set of preferences associated with a user describing how and when audio data should be modified, the data store 335 also may include a priority associated with each rule/preference. For example, suppose that a first rule indicates that audio data associated with a speaking user should be enhanced for a listening user if a whitelist associated with the speaking user identifies the listening user and that a second rule indicates that audio data associated with a speaking user should be diminished for a listening user if an object associated with the speaking user is not within a field of view of the listening user. In this example, if the first rule is associated with a higher priority than the second rule, regardless of whether an object associated with a speaking user is within a field of view of a listening user, audio data associated with the speaking user should be enhanced for the listening user if the listening user is identified in a whitelist associated with the speaking user.

The DOA estimation module 340 is configured to localize sound sources in the local area based in part on information from the sensor array 320. Localization is a process of determining where sound sources are located relative to the user. The DOA estimation module 340 performs a DOA analysis to localize one or more sound sources within the local area. The DOA analysis may include analyzing the intensity, spectra, and/or arrival time of each sound at the sensor array 320 to determine the direction from which the sounds originated. In some examples, the DOA analysis may include any suitable algorithm for analyzing a surrounding acoustic environment in which the audio system 150 is located. For example, the DOA analysis may be designed to receive input signals from the sensor array 320 and apply digital signal processing algorithms to the input signals to estimate a direction of arrival. These algorithms may include, for example, delay and sum algorithms where the input signal is sampled, and the resulting weighted and delayed versions of the sampled signal are averaged together to determine a DOA. A least mean squares (LMS) algorithm may also be implemented to create an adaptive filter. This adaptive filter may then be used to identify differences in signal intensity, for example, or differences in time of arrival. These differences may then be used to estimate the DOA. In another example, the DOA may be determined by converting the input signals into the frequency domain and selecting specific bins within the time-frequency (TF) domain to process. Each selected TF bin may be processed to determine whether that bin includes a portion of the audio spectrum with a direct path audio signal. Those bins having a portion of the direct-path signal may then be analyzed to identify the angle at which the sensor array 320 received the direct-path audio signal. The determined angle may then be used to identify the DOA for the received input signal. Other algorithms not listed above may also be used alone or in combination with the above algorithms to determine the DOA.

In some examples, the DOA estimation module 340 may also determine the DOA with respect to an absolute position of the audio system 150 within the local area. The position of the sensor array 320 may be received from an external system, such as some other component of a client device 105, a console 115 (e.g., an artificial reality console 115), a mapping server 125, a position sensor 140, etc. The external system may create a virtual model of the local area, in which the local area and the position of the audio system 150 are mapped. The received position information may include a location and/or an orientation of some or all of the audio system 150 (e.g., of the sensor array 320). The DOA estimation module 340 may update the estimated DOA based on the received position information.

The transfer function module 345 is configured to generate one or more acoustic transfer functions. Generally, a transfer function is a mathematical function giving a corresponding output value for each possible input value. Based on parameters of the detected sounds, the transfer function module 345 generates one or more acoustic transfer functions associated with the audio system 150. The acoustic transfer functions may be ATFs, HRTFs, other types of acoustic transfer functions, or some combination thereof. An ATF characterizes how a microphone or other acoustic sensor 280 receives a sound from a point in space.

An ATF includes a number of transfer functions that characterize a relationship between a sound source and a corresponding sound received by the acoustic sensors 280 in the sensor array 320. Accordingly, for a sound source, there is a corresponding transfer function for each of the acoustic sensors 280 in the sensor array 320. Note that the sound source may be, for example, someone or something generating sound in the local area, the user, or one or more transducers of the transducer array 310. The ATF for a particular sound source location relative to the sensor array 320 may differ from user to user due to a user's anatomy (e.g., ear shape, shoulders, etc.) that affects the sound as it travels to the user's ears. Accordingly, the ATFs of the sensor array 320 are personalized for each user.

In some examples, the transfer function module 345 determines one or more HRTFs for a user. The HRTF characterizes how an ear receives a sound from a point in space. The HRTF for a particular source location relative to a user is unique to each ear of the user (and is unique to the user) due to the user's anatomy (e.g., ear shape, shoulders, etc.) that affects the sound as it travels to the user's ears. In some examples, the transfer function module 345 may determine HRTFs for the user using a calibration process. In various examples, the transfer function module 345 may provide information about the user to a remote system. In such examples, the remote system may determine a set of HRTFs that are customized to the user (e.g., using machine learning) and provide the customized set of HRTFs to the audio system 150. In some examples, the user may adjust privacy settings to allow or prevent the transfer function module 345 from providing the information about the user to any remote systems.

The tracking module 350 is configured to track locations of one or more sound sources. The tracking module 350 may do so by comparing current DOA estimates with each other and with a stored history of previous DOA estimates. In some examples, the tracking module 350 may recalculate DOA estimates on a periodic schedule, such as once per second, or once per millisecond. The tracking module 350 may compare the current DOA estimates with previous DOA estimates, and in response to a change in a DOA estimate for a sound source, the tracking module 350 may determine that the sound source moved. In some examples, the tracking module 350 may detect a change in location based on visual information received from a client device 105 or some other external source. The tracking module 350 may track the movement of one or more sound sources over time. The tracking module 350 may store values for a number of sound sources and a location of each sound source at each point in time. In response to a change in a value of the number or locations of the sound sources, the tracking module 350 may determine that a sound source moved. The tracking module 350 may calculate an estimate of the localization variance. The localization variance may be used as a confidence level for each determination of a change in movement.

The beamforming module 355 is configured to process one or more ATFs to selectively emphasize sounds from sound sources within a certain area while de-emphasizing sounds from other areas. In analyzing sounds detected by the sensor array 320, the beamforming module 355 may combine information from different acoustic sensors 280 to emphasize sound associated from a particular region of the local area while de-emphasizing sound that is from outside of the region. The beamforming module 355 may isolate an audio signal associated with sound from a particular sound source from other sound sources in the local area (e.g., based on different DOA estimates from the DOA estimation module 340 and the tracking module 350). The beamforming module 355 may thus selectively analyze discrete sound sources in the local area. In some examples, the beamforming module 355 may enhance a signal from a sound source. For example, the beamforming module 355 may apply sound filters which eliminate signals above, below, or between certain frequencies. Signal enhancement acts to enhance sounds associated with a given identified sound source relative to other sounds detected by the sensor array 320. In some examples, the beamforming module 355 may enhance or diminish audio data or one or more noises included in the audio data based on a set of rules and/or a set of preferences associated with a user (e.g., stored in the data store 335). For example, based on a set of rules stored in the data store 335, the beamforming module 355 may execute instructions to process one or more ATFs to increase or decrease a volume of a noise or apply one or more filters to audio data including the noise.

The sound filter module 360 determines sound filters for the transducer array 310. In some examples, the sound filters cause the audio content to be spatialized, such that the audio content appears to originate from a target region. The sound filter module 360 may use HRTFs and/or acoustic parameters to generate the sound filters. The acoustic parameters describe acoustic properties of the local area. For example, the acoustic parameters may include a reverberation time, a reverberation level, a room impulse response, etc. In some examples, the sound filter module 360 calculates one or more of the acoustic parameters. In various examples, the sound filter module 360 requests the acoustic parameters from a mapping server 125. The sound filter module 360 provides the sound filters to the transducer array 310. In some examples, the sound filters may cause positive or negative amplification of sounds as a function of frequency. In some examples, the sound filter module 360 may provide sound filters that modify audio data or one or more noises included in the audio data based on a set of rules and/or a set of preferences associated with a user (e.g., stored in the data store 335). For example, based on a set of rules and a set of preferences associated with a user stored in the data store 335, the sound filter module 360 may execute instructions to provide sound filters to the transducer array 310 to change a spatialization of a noise included in audio data.

The noise analysis module 365 may analyze one or more noises (e.g., speech, music, ambient noise, etc.) included in audio data. In some examples, the noise analysis module 365 may determine whether a volume of a noise included in audio data is at least a threshold volume. The noise analysis module 365 may do so by first determining the volume of the noise based on a logarithmic scale (e.g., in decibels). For example, the noise analysis module 365 may determine that a volume of a noise corresponding to speech included in audio data is 60 decibels. The noise analysis module 365 may then compare the volume of the noise to the threshold volume and determine whether the volume of the noise is at least the threshold volume based on the comparison. In the above example, the noise analysis module 365 may compare the volume of the speech to a threshold volume associated with shouting (e.g., 110 decibels) and determine whether the volume of the speech is at least the threshold volume based on the comparison.

In various examples, the noise analysis module 365 also may identify one or more noises included in audio data. Examples of noises include: speech (e.g., from different voices, in different languages, etc.), music (e.g., different genres of music), ambient noise (e.g., from an air conditioner, static, rainfall, etc.), noises from animals or objects (e.g., car keys, keyboard strokes, mouse clicks, etc.), or any other types of noises. For example, the noise analysis module 365 may identify noises included in audio data corresponding to a person talking, a baby crying, a dog barking, and traffic noise. In some examples, the noise analysis module 365 may compare characteristics of a noise (e.g., its amplitude, frequency, wavelength, volume, whether it is continuous or intermittent, etc.) to characteristics of different noises stored in the data store 335 and identify the noise based on the comparison. In some examples, the noise analysis module 365 may identify the noise(s) included in audio data using speech recognition, natural language processing (NLP), statistical models, neural networks, or any other suitable technique or combination of techniques. For example, the noise analysis module 365 may access a machine learning model that is trained to predict a likelihood that a noise is included in audio data. In this example, the noise analysis module 365 may apply the model to characteristics of each noise included in the audio data and receive an output corresponding to a predicted likelihood that the noise is included in the audio data. Continuing with this example, the noise analysis module 365 may identify the noise included in the audio data if the predicted likelihood is at least a threshold likelihood. In examples in which a noise included in audio data corresponds to speech, the noise analysis module 365 also may identify words or phrases in one or more languages included in the speech (e.g., using speech recognition).

The access module 370 may determine whether one or more users are permitted to receive or prohibited from receiving audio data associated with a user. In some examples, the access module 370 may make this determination based on data identifying one or more users permitted to receive the audio data and/or data identifying one or more users prohibited from receiving the audio data stored in the data store 335. For example, the access module 370 may compare information identifying a listening user (e.g., a username associated with the listening user) to a whitelist associated with a speaking user stored in the data store 335, in which the whitelist identifies users permitted to receive audio data associated with the speaking user. In this example, the access module 370 also may compare the information identifying the listening user to a blocked list associated with the speaking user stored in the data store 335, in which the blocked list identifies users prohibited from receiving audio data associated with the speaking user. Continuing with this example, if the listening user is identified in the whitelist, the access module 370 may determine that the listening user is permitted to receive the audio data. However, in the above example, the access module 370 may determine that the listening user is prohibited from receiving the audio data if the listening user is not identified in the whitelist or is identified in the blocked list. As an additional example, if audio data associated with a speaking user includes speech, the access module 370 may compare words or phrases included in the audio data to one or more safe words (e.g., included in a whitelist associated with the speaking user) stored in the data store 335. In this example, the access module 370 may determine that a listening user is permitted to receive the audio data if the audio data includes any safe words. Alternatively, in the above example, the access module 370 may determine that the listening user is prohibited from receiving the audio data if the audio data does not include any safe words.

The effort determination module 375 may determine a listening effort of a user. In some examples, the effort determination module 375 may make this determination using one or more machine learning models (e.g., regression models, support vector machines, neural networks, etc.) that are trained to predict a listening effort of a user. In such examples, the machine learning model(s) may make the prediction based on one or more actions of a user that may indicate a listening effort of the user. Examples of such actions include: moving towards an object associated with audio data, leaning towards the object, turning their head so that one of their ears is directed towards the object, cupping their hand around an outer portion of their ear, or any other suitable actions. To use the machine learning model(s), the effort determination module 375 may access the model(s) and apply the model(s) to a set of attributes associated with one or more actions of a user that may indicate a listening effort of the user. Examples of such attributes include: a gaze point of the user, a position of the user's head or hand, an orientation of the user's head or hand, a direction of motion of the user's head or hand, a speed at which the user's head or hand is moving, etc., which may be received from the DCA 145, the position sensor 140, the I/O interface 110, one or more tracking modules 160, 350, or any other suitable source. For example, if an action of a user corresponds to cupping their hand around an outer portion of their ear, the effort determination module 375 may apply the machine learning model(s) to a set of attributes associated with the action including a position and an orientation of each hand of the user and a position of the head of the user. Once the machine learning model(s) is/are applied, the effort determination module 375 may receive an output from the model(s) indicating a predicted listening effort of the user. In the above example, the output may correspond to a percentage that is proportional to the listening effort of the user.

In examples in which the effort determination module 375 determines a listening effort of a user using one or more machine learning models, the model(s) may be trained by the machine learning training module 380 based on historical information including attributes associated with actions of the user. Examples of such attributes include: a gaze point of the user, a position, orientation, direction of motion, and/or speed associated with the user (e.g., of a head, a hand, or other object associated with the user), a position, orientation, direction of motion, and/or speed of an object associated with audio data, a distance between the object associated with the user and the object associated with the audio data, etc. The historical information may be received from the DCA 145, the position sensor 140, the I/O interface 110, one or more tracking modules 160, 350, or any other suitable source. For example, the machine learning training module 380 may receive a set of attributes associated with multiple actions of a user. In this example, the set of attributes may include a position and an orientation of an object associated with the user relative to an object associated with audio data, a distance between the object associated with the user and the object associated with the audio data, a direction of motion and speed associated with the object associated with the user, etc. Continuing with this example, for each action, the machine learning training module 380 may receive a label indicating a listening effort of the user (e.g., by prompting the user for this information) and the machine learning training module 380 may then train the machine learning model(s) based on the set of attributes and the label for each action. Once trained, the machine learning model(s) may be stored in the data store 335. A machine learning model may be retrained periodically or as new training data becomes available. For example, a machine learning model may be retrained each time a user provides information describing their listening effort and the retrained model may then be stored in the data store 335.

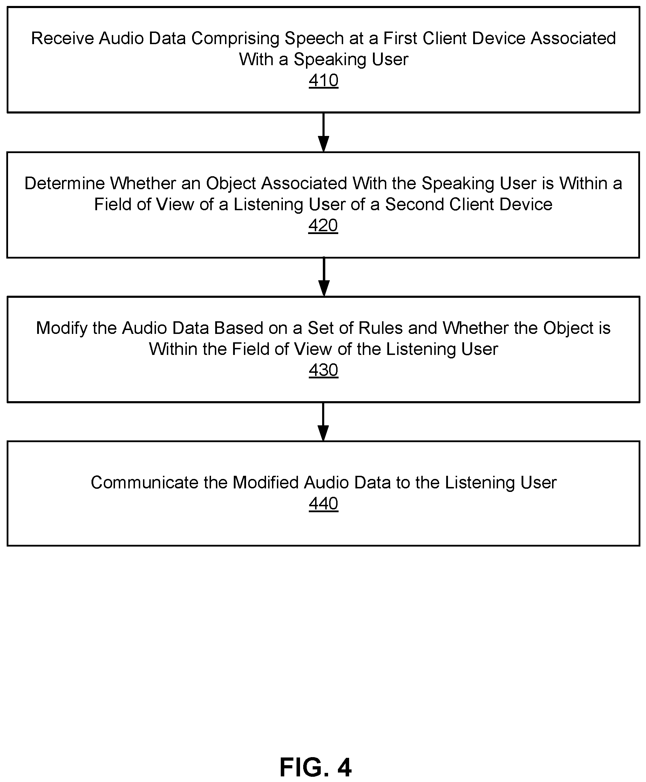

FIG. 4 is a flowchart of a method for modifying audio data associated with a speaking user based on a set of rules and a field of view of a listening user in an artificial reality environment. The process shown in FIG. 4 may be performed by one or more client devices (e.g., client device 105) and/or one or more components of the client device(s) 105, such as one or more audio systems (e.g., audio system 150). Other entities may perform some or all of the steps in FIG. 4 in other examples. Examples may include different and/or additional steps, or perform the steps in different orders.

Audio data including speech is received 410 (e.g., by the sensor array 320 of the audio system 150) at a first client device 105 (e.g., a headset) executing an application (e.g., a gaming application, a conferencing application, etc.) in an artificial reality environment, in which the first client device 105 is associated with a speaking user. The audio data may be received 410 upon their detection within a local area of the first client device 105. For example, the audio data 410 may be received 410 when detected by one or more acoustic wave sensors, microphones, sound transducers, etc. that are positioned on the client device 105 associated with the speaking user, in an ear canal of the speaking user, on a neckband, etc. In some examples, the audio data may then be sent (e.g., via the network 120 and/or the console 115) to a second client device 105 (e.g., a headset) associated with a listening user executing the application.

In various examples, the audio system 150 (e.g., of the first or second client device 105) may determine (e.g., using the noise analysis module 365) whether a volume of a noise (e.g., the speech) included in the audio data is at least a threshold volume. The audio system 150 may do so by first determining the volume of the noise based on a logarithmic scale (e.g., in decibels). For example, the audio system 150 may determine that a volume of a noise corresponding to the speech included in the audio data is 60 decibels. The audio system 150 may then compare the volume of the noise to the threshold volume and determine whether the volume of the noise is at least the threshold volume based on the comparison. In the above example, the audio system 150 may compare the volume of the speech to a threshold volume associated with shouting (e.g., 110 decibels) and determine whether the volume of the speech is at least the threshold volume based on the comparison. In examples in which the audio system 150 of the first client device 105 determines whether a volume of a noise included in the audio data is at least a threshold volume, information describing the volume of the noise may then be sent (e.g., via the network 120 and/or the console 115) to the second client device 105 associated with the listening user executing the application, or vice versa.

In some examples, the audio system 150 (e.g., of the first or second client device 105) also may identify (e.g., using the noise analysis module 365) one or more noises included in the audio data. Examples of noises include: speech (e.g., from different voices, in different languages, etc.), music (e.g., different genres of music), ambient noise (e.g., from an air conditioner, static, rainfall, etc.), noises from animals or objects (e.g., car keys, keyboard strokes, mouse clicks, etc.), or any other types of noises. For example, the audio system 150 may identify noises included in the audio data corresponding to a person talking, a baby crying, a dog barking, and traffic noise. In some examples, the audio system 150 may compare characteristics of a noise (e.g., its amplitude, frequency, wavelength, volume, whether it is continuous or intermittent, etc.) to characteristics of different noises stored in the audio system 150 (e.g., in the data store 335) and identify the noise based on the comparison. In some examples, the audio system 150 may identify the noise(s) using speech recognition, natural language processing (NLP), statistical models, neural networks, or any other suitable technique or combination of techniques. For example, the audio system 150 may access a machine learning model that is trained to predict a likelihood that a noise is included in audio data. In this example, the audio system 150 may apply the model to characteristics of each noise included in the audio data and receive an output corresponding to a predicted likelihood that the noise is included in the audio data. Continuing with this example, the audio system 150 may identify the noise included in the audio data if the predicted likelihood is at least a threshold likelihood. In various examples, the audio system 150 also may identify words or phrases in one or more languages included in the speech (e.g., using speech recognition). In examples in which the audio system 150 of the first client device 105 identifies the noise(s) included in the audio data and/or one or more words/phrases included in the speech, information identifying the noise(s) and/or word(s)/phrase(s) included in the speech may then be sent (e.g., via the network 120 and/or the console 115) to the second client device 105 associated with the listening user executing the application, or vice versa.

The first or second client device 105 may then determine 420 (e.g., using the tracking module 160) whether an object associated with the speaking user is within a field of view of the listening user of the second client device 105. In some examples, this determination may be made based on a location and/or an orientation of one or more objects associated with the users. For example, the first or second client device 105 may determine a location of a first virtual object corresponding to an avatar associated with the speaking user and a location and an orientation of a second virtual object corresponding to an avatar associated with the listening user in the artificial reality environment. In this example, the first or second client device 105 may then determine 420 that the avatar associated with the speaking user is within the field of view of the listening user if the avatar associated with the speaking user is within a threshold distance of the avatar associated with the listening user and/or within a threshold number of degrees of a direction that the head of the avatar associated with the listening user is facing (e.g., 110 degrees diagonal). Alternatively, in the above example, the first or second client device 105 may determine 420 that the avatar associated with the speaking user is not within the field of view of the listening user if the avatar associated with the speaking user is not within the threshold distance of the avatar associated with the listening user or that the avatar associated with the speaking user is not within the threshold number of degrees of the direction that the head of the avatar associated with the listening user is facing. In examples in which the first client device 105 determines 420 whether the object associated with the speaking user is within the field of view of the listening user of the second client device 105, information describing the determination may then be sent (e.g., via the network 120 and/or the console 115) to the second client device 105 associated with the listening user executing the application, or vice versa.

In some examples, the audio system 150 (e.g., of the first or second client device 105) also or alternatively may determine (e.g., using the access module 370) whether the listening user is permitted to receive or prohibited from receiving the audio data. In some examples, the audio system 150 may make this determination based on data stored in the audio system 150 (e.g., in the data store 335) identifying one or more users permitted to receive the audio data and/or data identifying one or more users prohibited from receiving the audio data. For example, the audio system 150 may compare information identifying the listening user (e.g., a username associated with the listening user) to a whitelist associated with the speaking user stored in the audio system 150, in which the whitelist identifies users permitted to receive audio data associated with the speaking user. In this example, the audio system 150 also may compare the information identifying the listening user to a blocked list associated with the speaking user stored in the audio system 150, in which the blocked list identifies users prohibited from receiving audio data associated with the speaking user. Continuing with this example, if the listening user is identified in the whitelist, the audio system 150 may determine that the listening user is permitted to receive the audio data. However, in the above example, the audio system 150 may determine that the listening user is prohibited from receiving the audio data if the listening user is not identified in the whitelist or is identified in the blocked list. As an additional example, the audio system 150 may compare words or phrases included in the audio data to one or more safe words (e.g., included in a whitelist associated with the speaking user stored in the data store 335). In this example, the audio system 150 may determine that the listening user is permitted to receive the audio data if the audio data includes any safe words. Alternatively, in the above example, the audio system 150 may determine that the listening user is prohibited from receiving the audio data if the audio data does not include any safe words. In examples in which the audio system 150 of the first client device 105 determines whether the listening user is permitted to receive or prohibited from receiving the audio data, information describing the determination may then be sent (e.g., via the network 120 and/or the console 115) to the second client device 105 associated with the listening user executing the application, or vice versa.

In various examples, the first or second client device 105 also or alternatively may determine (e.g., using the tracking module 160) whether the object associated with the listening user is within a boundary around the object associated with the speaking user. In some examples, the boundary may correspond to a threshold radius of the object associated with the speaking user. For example, the first or second client device 105 may determine a location of a first virtual object corresponding to an avatar associated with the speaking user and a location of a second virtual object corresponding to an avatar associated with the listening user in the artificial reality environment. In this example, the first or second client device 105 may determine a distance between the avatars and compare the distance to a threshold radius of the avatar associated with the speaking user, in which the threshold radius corresponds to a boundary around the avatar. Continuing with this example, the first or second client device 105 may determine that the avatar associated with the listening user is within the boundary around the avatar associated with the speaking user if the distance is less than the threshold radius. Alternatively, in the above example, the first or second client device 105 may determine that the avatar associated with the listening user is outside the boundary around the avatar associated with the speaking user if the distance is greater than the threshold radius. In examples in which the first client device 105 determines whether the object associated with the listening user is within the boundary around the object associated with the speaking user, information describing the determination may then be sent (e.g., via the network 120 and/or the console 115) to the second client device 105 associated with the listening user executing the application, or vice versa.

In some examples, the first client device 105 also or alternatively may determine (e.g., using the DCA 145) whether a gaze point of the speaking user matches a location of the object associated with the listening user in the artificial reality environment. The first client device 105 may determine the gaze point of the speaking user based on one or more gaze lines for the eye(s) of the speaking user. The first client device 105 may determine a gaze line for each eye based on a position and an orientation of the eye. For example, the first client device 105 may determine that a gaze line for an eye of the speaking user extends from the center of the eyeball, through the center of the pupil, and away from the speaking user. The first client device 105 may then use the gaze line(s) to determine the gaze point of the speaking user. For example, the first client device 105 may determine that the gaze point of the speaking user corresponds to a point in space at which gaze lines for the speaking user's eyes intersect. In this example, the first client device 105 may then determine whether the gaze point of the speaking user matches the location of the object associated with the listening user (e.g., an avatar) in the artificial reality environment. In examples in which the first client device 105 determines whether the gaze point of the speaking user matches the location of the object associated with the listening user in the artificial reality environment, information describing the determination may then be sent (e.g., via the network 120 and/or the console 115) to the second client device 105 associated with the listening user executing the application.

In some examples, the audio system 150 (e.g., of the first or second client device 105) also or alternatively may determine (e.g., using the effort determination module 375) a listening effort of the listening user. In some examples, the audio system 150 may make this determination using one or more machine learning models (e.g., regression models, support vector machines, neural networks, etc.) that are trained (e.g., by the machine learning training module 380) to predict a listening effort of a user. In such examples, the machine learning model(s) may make the prediction based on one or more actions of the listening user that may indicate a listening effort of the listening user. Examples of such actions include: moving towards an object associated with audio data, leaning towards the object, turning their head so that one of their ears is directed towards the object, cupping their hand around an outer portion of their ear, or any other suitable actions. To use the machine learning model(s), the audio system 150 may access the model(s) and apply the model(s) to a set of attributes associated with one or more actions of the listening user that may indicate a listening effort of the listening user. Examples of such attributes include: a gaze point of the listening user, a position of the listening user's head or hand, an orientation of the listening user's head or hand, a direction of motion of the listening user's head or hand, a speed at which the listening user's head or hand is moving, etc., which may be received from one or more sources (e.g., the DCA 145, the position sensor 140, the I/O interface 110, one or more tracking modules 160, 350, etc.). For example, if an action of the listening user corresponds to cupping their hand around an outer portion of their ear, the audio system 150 may apply the machine learning model(s) to a set of attributes associated with the action including a position and an orientation of each hand of the listening user and a position of the head of the listening user. Once the machine learning model(s) is/are applied, the audio system 150 may receive an output from the model(s) indicating a predicted listening effort of the listening user. In the above example, the output may correspond to a percentage that is proportional to the listening effort of the listening user. In examples in which the audio system 150 of the first client device 105 determines a listening effort of the listening user, information describing the determination may then be sent (e.g., via the network 120 and/or the console 115) to the second client device 105 associated with the listening user executing the application, or vice versa.

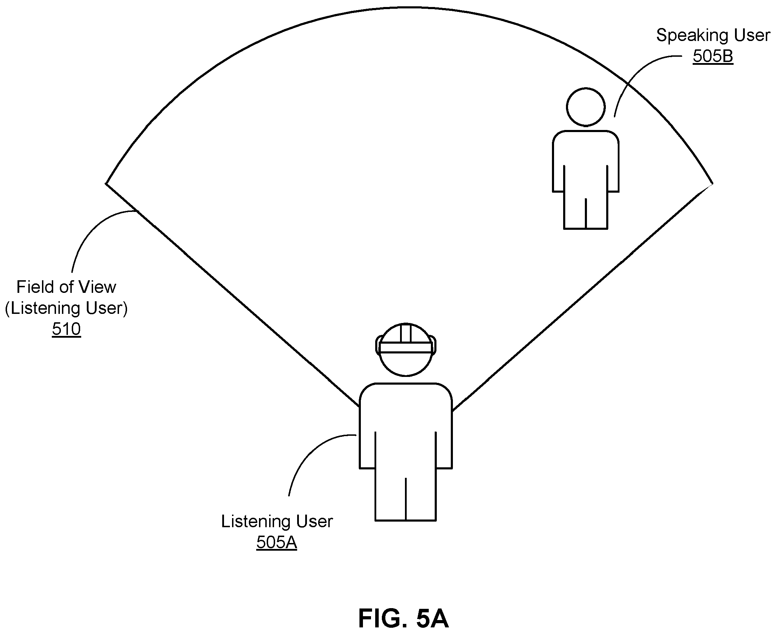

The audio system 150 (e.g., of the first or second client device 105) then modifies 430 (e.g., using the audio controller 250) the audio data. The audio data may be modified 430 (e.g., by enhancing it, diminishing it, etc.) using various techniques. Examples of such techniques include: blocking, cancelling, masking, filtering, amplifying, spatializing, or using any other suitable technique or combination of techniques. For example, to enhance the audio data, the audio data may be amplified and/or its spatialization may be changed so that it appears to originate from a region closer to the listening user. In this example, the audio data also may be enhanced by diminishing other audio data (e.g., audio data associated with other users of the application). As an additional example, to diminish the audio data, the audio data may be filtered out, masked, blocked, cancelled, or its spatialization may be changed so that it appears to originate from a region further from the listening user. In examples in which the audio system 150 (e.g., of the first or second client device 105) identifies one or more noises included in the audio data, the audio system 150 may modify 430 the audio data by executing instructions for noise blocking, noise cancelling, noise masking, noise filtering, noise amplification, noise spatialization, etc. on the noise(s). For example, if in addition to speech, the audio data also includes another noise from traffic, the audio data may be modified 430 by enhancing the speech and/or diminishing the traffic noise. In this example, the speech may be enhanced by amplifying it and/or by changing its spatialization so that it appears to originate from a region closer to the listening user. In the above example, the traffic noise may be diminished by filtering it out, masking it, blocking it, cancelling it, and/or changing its spatialization so that it appears to originate from a region further from the listening user. The audio data may be modified 430 based on various factors, some of which are described below in conjunction with FIGS. 5A-5E, which illustrate example scenarios described by a set of rules for modifying 430 audio data associated with a speaking user in an artificial reality environment.

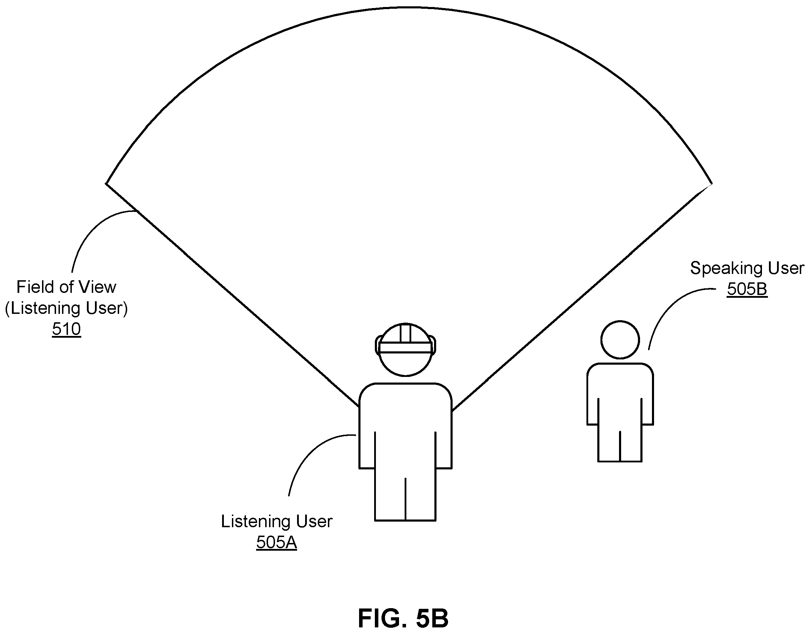

In examples in which a determination is made as to whether the object associated with the speaking user is within the field of view of the listening user, the audio data may be modified 430 based on the determination and a set of rules stored in the first or second client device 105 (e.g., in the data store 335). In some examples, if the first or second client device 105 determines 420 that the object associated with the speaking user is within the field of view of the listening user, the audio system 150 may modify 430 the audio data by enhancing the audio data or the speech included in the audio data based on the set of rules. For example, based on the set of rules, if an object associated with the speaking user 505B is within the field of view 510 of the listening user 505A, as shown in FIG. 5A, the audio data or the speech included in the audio data may be enhanced (e.g., by amplifying it and/or changing its spatialization so that it appears to originate from a region closer to the listening user 505A, by diminishing other audio data or other noises included in the audio data, etc.). Similarly, in various examples, if the first or second client device 105 determines 420 that the object associated with the speaking user 505B is not within the field of view 510 of the listening user 505A, the audio system 150 may modify 430 the audio data by diminishing the audio data or the speech included in the audio data based on the set of rules. For example, based on the set of rules, if the object associated with the speaking user 505B is not within the field of view 510 of the listening user 505A, as shown in FIG. 5B, the audio data or the speech included in the audio data may be diminished (e.g., by filtering it out, masking it, blocking it, cancelling it, or changing its spatialization so that it appears to originate from a region further from the listening user 505A).

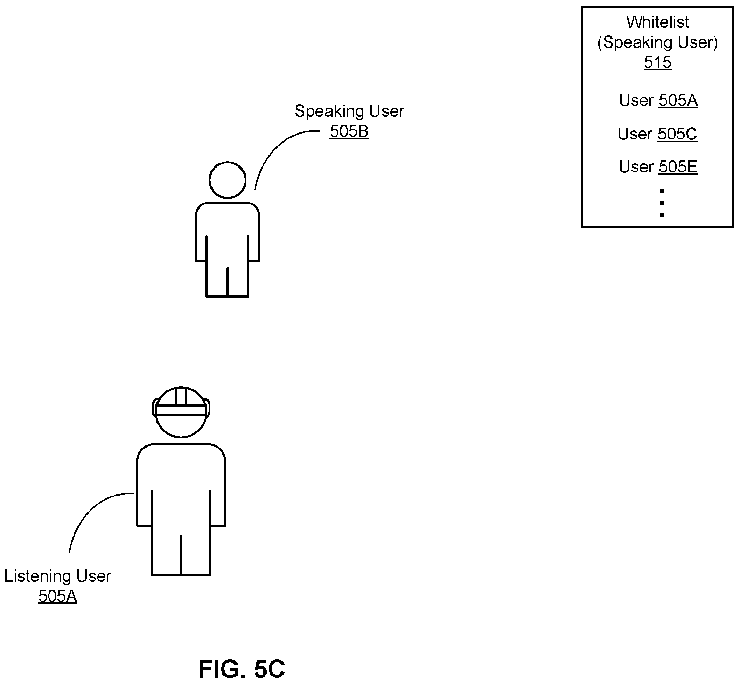

In examples in which a determination is made as to whether the speaking user 505B is permitted to receive or prohibited from receiving the audio data, the audio data may be modified 430 based on the determination and a set of rules stored in the first or second client device 105 (e.g., in the data store 335). In some examples, if the audio system 150 (e.g., of the first or second client device 105) determines that the speaking user 505B is permitted to receive the audio data, the audio system 150 may modify 430 the audio data or the speech included in the audio data by enhancing it based on the set of rules. For example, suppose that the audio system 150 (e.g., of the first or second client device 105) determines that the speaking user 505B is permitted to receive the audio data because a whitelist 515 associated with the speaking user 505B identifies the listening user 505A, as shown in FIG. 5C, or includes a safe word that is also included in the speech. In this example, based on the set of rules, the audio data or the speech included in the audio data may be enhanced (e.g., by amplifying it and/or changing its spatialization so that it appears to originate from a region closer to the listening user 505A, by diminishing other audio data or other noises included in the audio data, etc.). Similarly, in various examples, if the audio system 150 (e.g., of the first or second client device 105) determines that the speaking user 505B is prohibited from receiving the audio data, the audio system 150 may modify 430 the audio data by diminishing the audio data or the speech included in the audio data based on the set of rules. For example, suppose that a whitelist 515 associated with the speaking user 505B does not identify the listening user 505A, a blocked list associated with the speaking user 505B identifies the listening user 505A, and/or the speech does not include any safe words. In this example, based on the set of rules, the audio data or the speech included in the audio data may be diminished (e.g., by filtering it out, masking it, blocking it, cancelling it, or changing its spatialization so that it appears to originate from a region further from the listening user 505A).

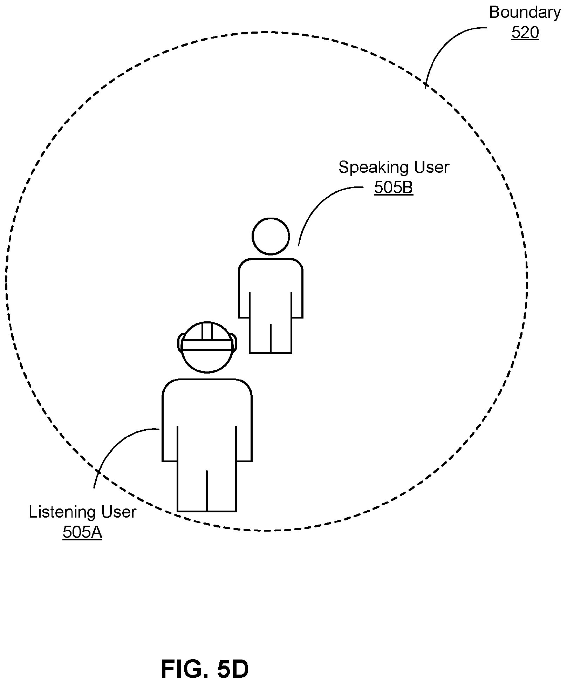

In examples in which a determination is made as to whether the object associated with the listening user 505A is within a boundary around the object associated with the speaking user 505B, the audio data may be modified 430 based on the determination and a set of rules stored in the first or second client device 105 (e.g., in the data store 335). In some examples, if the first or second client device 105 determines that the object associated with the listening user 505A is within the boundary around the object associated with the speaking user 505B, the audio system 150 may modify 430 the audio data by enhancing the audio data or the speech included in the audio data based on the set of rules. For example, based on the set of rules, if the object associated with the listening user 505A is within the boundary 520 around the object associated with the speaking user 505B in the artificial reality environment, as shown in FIG. 5D, the audio data or the speech included in the audio data may be enhanced (e.g., by amplifying it and/or changing its spatialization so that it appears to originate from a region closer to the listening user 505A, by diminishing other audio data or other noises included in the audio data, etc.). Similarly, in various examples, if the first or second client device 105 determines that the object associated with the listening user 505A is outside the boundary 520 around the object associated with the speaking user 505B, the audio system 150 may modify 430 the audio data by diminishing the audio data or the speech included in the audio data based on the set of rules. For example, based on the set of rules, if the object associated with the listening user 505A is outside the boundary 520 around the object associated with the speaking user 505B in the artificial reality environment, the audio data or the speech included in the audio data may be diminished (e.g., by filtering it out, masking it, blocking it, cancelling it, or changing its spatialization so that it appears to originate from a region further from the listening user 505A).

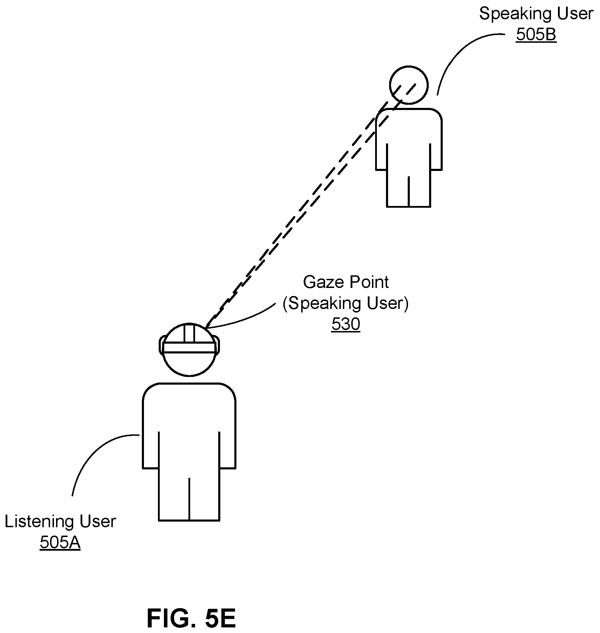

In examples in which a determination is made as to whether a gaze point of the speaking user 505B matches a location of the object associated with the listening user 505A in the artificial reality environment, the audio data may be modified 430 based on the determination and a set of rules stored in the first or second client device 105 (e.g., in the data store 335). In some examples, if the first client device 105 determines that the gaze point of the speaking user 505B matches the location of the object associated with the listening user 505A in the artificial reality environment, the audio system 150 may modify 430 the audio data by enhancing the audio data or the speech included in the audio data based on the set of rules. For example, based on the set of rules, if the gaze point 530 of the speaking user 505B matches the location of the object associated with the listening user 505A in the artificial reality environment, as shown in FIG. 5E, the audio data or the speech included in the audio data may be enhanced (e.g., by amplifying it and/or changing its spatialization so that it appears to originate from a region closer to the listening user 505A, by diminishing other audio data or other noises included in the audio data, etc.). Similarly, in various examples, if the first client device 105 determines that the gaze point 530 of the speaking user 505B does not match the location of the object associated with the listening user 505A in the artificial reality environment, the audio data may be modified 430 by diminishing the audio data or the speech included in the audio data based on the set of rules. For example, based on the set of rules, if the gaze point 530 of the speaking user 505B does not match the location of the object associated with the listening user 505A in the artificial reality environment, the audio data or the speech included in the audio data may be diminished (e.g., by filtering it out, masking it, blocking it, cancelling it, or changing its spatialization so that it appears to originate from a region further from the listening user 505A).

In examples in which a listening effort of the listening user 505A is determined, the audio data may be modified 430 based on the determination and a set of rules stored in the first or second client device 105 (e.g., in the data store 335). In some examples, if the audio system 150 (e.g., of the first or second client device 105) determines the listening effort of the listening user 505A, the audio system 150 may modify 430 the audio data in proportion to the listening effort based on a set of rules. For example, based on the set of rules, the audio data or the speech included in the audio data may be enhanced in proportion to the listening effort of the listening user 505A (e.g., by amplifying it and/or changing its spatialization so that it appears to originate from a region closer to the listening user 505A, by diminishing other audio data or other noises included in the audio data, etc.). In the above example, based on the set of rules, other audio data (e.g., audio data originating from other users or sources) or other noises included in the audio data also or alternatively may be diminished in proportion to the listening effort of the listening user 505A (e.g., by filtering it out, masking it, blocking it, cancelling it, or changing its spatialization so that it appears to originate from a region further from the listening user 505A).

In examples in which a determination is made as to whether the volume of a noise (e.g., the speech) included in the audio data is at least a threshold volume (e.g., associated with shouting), the audio data may be modified 430 based on the determination and a set of rules stored in the first or second client device 105 (e.g., in the data store 335). In some examples, if the audio system 150 (e.g., of the first or second client device 105) determines that the volume of the noise included in the audio data is at least the threshold volume, the audio system 150 may modify 430 the audio data by enhancing the audio data or the speech included in the audio data based on the set of rules. For example, based on the set of rules, if the speech included in the audio data is at least the threshold volume, the audio data or the speech included in the audio data may be enhanced (e.g., by amplifying it and/or changing its spatialization so that it appears to originate from a region closer to the listening user 505A, by diminishing other audio data or other noises included in the audio data, etc.). Similarly, in various examples, if the audio system 150 (e.g., of the first or second client device 105) determines that the volume of the noise included in the audio data is less than the threshold volume, the audio system 150 may modify 430 the audio data by diminishing the audio data or the speech included in the audio data based on the set of rules. For example, based on the set of rules, if the speech included in the audio data is less than the threshold volume, the audio data or the speech included in the audio data may be diminished (e.g., by filtering it out, masking it, blocking it, cancelling it, or changing its spatialization so that it appears to originate from a region further from the listening user 505A).

In various examples, the audio system 150 may modify 430 the audio data based on a setting (e.g., business, social, etc.) associated with the application being executed by the first and second client devices 105 and a set of rules stored in the first or second client device 105 (e.g., in the data store 335). A setting associated with the application may be associated with a set of customs, practices, etc. For example, if the application is a game application, the application may be associated with a social setting. As an additional example, if the application is a conferencing application, the application may be associated with a business setting. In some examples, if the application is associated with a social setting, the audio system 150 may modify 430 the audio data by diminishing the audio data or the speech included in the audio data based on the set of rules. For example, based on the set of rules, if the application is associated with a social setting, noises included in the audio data originating from outside a boundary 520 associated with the speaking user 505B may be diminished (e.g., by filtering it out, masking it, blocking it, cancelling it, or changing its spatialization so that it appears to originate from a region further from the listening user 505A).

In some examples, the audio system 150 may modify 430 the audio data based on information describing a physical characteristic and/or a mental state associated with the listening user 505A and a set of rules stored in the first or second client device 105 (e.g., in the data store 335). Examples of physical characteristics of the listening user 505A include an age of the listening user 505A, a hearing impairment of the listening user 505A, etc., while examples of a mental state of the listening user 505A include a mood of the listening user 505A, a stress level of the listening user 505A, etc. For example, based on the set of rules, if the listening user 505A has a hearing impairment or is at least a threshold age, the audio data or the speech included in the audio data may be enhanced (e.g., by amplifying it and/or changing its spatialization so that it appears to originate from a region closer to the listening user 505A, by diminishing other audio data or other noises included in the audio data, etc.). Information describing a physical characteristic or a mental state associated with the listening user 505A may be received from the listening user 505A via manual input (e.g., via the I/O interface 110). In some examples, this information may be determined or inferred based on one or more biomarkers (e.g., blood oxygen level, glucose level, etc.), physiological responses (e.g., pupillary response), vital signs (e.g., body temperature, pulse), etc. associated with the listening user 505A (e.g., using machine learning). For example, based on the set of rules, if the listening user 505A likely has a high stress level (e.g., based on a pulse that is at least a threshold rate for at least a threshold amount of time and a normal body temperature), the audio data may be enhanced using any technique or combination of techniques other than amplification. In examples in which information about a physical characteristic or a mental state associated with the listening user 505A is determined or inferred, the determination/inference and/or information about the user used to make the determination/inference may be received from one or more sources. Examples of such sources include: the second client device 105 (e.g., via the DCA 145), one or more devices coupled to the second client device 105 (e.g., a fitness monitor, an activity tracker, a smartwatch, a heart rate monitor, or a glucose monitor), etc.

In various examples, the audio data also or alternatively may be modified 430 based on a set of preferences associated with the listening user 505A (e.g., stored in the data store 335 of the second client device 105). In such examples, the set of preferences may describe how and when audio data should be modified 430 (e.g., by enhancing or diminishing it). For example, the set of preferences may indicate that speech included in audio data should be enhanced between 9:00 AM and 5:00 PM on weekdays or anytime the listening user 505A is in a business setting and that ambient noises included in audio data should be diminished during the same time and in the same setting. In some examples, one or more of the preferences may be received from the listening user 505A. For example, a prompt may be sent to the listening user 505A (e.g., via the display assembly 130 of the second client device 105) to select one or more options from a set of options for modifying 430 the audio data. In the above example, options may be received from the listening user 505A (e.g., via a selection action, such as drag-and-drop using an input device included in the I/O interface 110) to amplify or change the spatialization of the audio data and/or certain noises (e.g., the speech) included in the audio data, such that the audio data/noises appear to originate from different regions and to block, cancel, or filter out other audio data/noises (e.g., ambient noises). In this example, upon receiving the options, the options may be included among the set of preferences associated with the listening user 505A. Continuing with this example, the set of preferences may be updated upon receiving one or more additional options from the listening user 505A.

In examples in which the audio data is modified 430 based on a set of rules and/or a set of preferences associated with the listening user 505A, the audio data also may be modified 430 based on a priority associated with each rule/preference. For example, suppose that a first rule indicates that audio data associated with a speaking user 505B should be enhanced for a listening user 505A if a whitelist 515 associated with the speaking user 505B identifies the listening user 505A and that a second rule indicates that audio data associated with a speaking user 505B should be diminished for a listening user 505A if an object associated with the speaking user 505B is not within a field of view 510 of the listening user 505A. In this example, if the first rule is associated with a higher priority than the second rule, regardless of whether the object associated with the speaking user 505B is within the field of view 510 of the listening user 505A, the audio data associated with the speaking user 505B may be enhanced if the listening user 505A is identified in the whitelist 515 associated with the speaking user 505B. In examples in which the audio system 150 of the first client device 105 modifies 430 the audio data, the modified audio data may then be sent (e.g., via the network 120 and/or the console 115) to the second client device 105 associated with the listening user 505A executing the application.

Referring back to FIG. 4, the audio system 150 of the second client device 105 may then communicate 440 (e.g., using the transducer array 310) the modified audio data to the listening user 505A. For example, the audio system 150 may communicate 440 the modified audio data to the listening user 505A via one or more speakers 260, a tissue transducer 270, etc. of the second client device 105.

The foregoing description of the examples has been presented for illustration; it is not intended to be exhaustive or to limit the patent rights to the precise forms disclosed. Persons skilled in the relevant art can appreciate that many modifications and variations are possible considering the above disclosure.

Some portions of this description describe the examples in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all the steps, operations, or processes described.

Examples may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples may also relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
receiving audio data comprising speech at a first client device executing an application in an artificial reality environment, wherein the first client device is associated with a speaking user;
determining whether an object associated with the speaking user is within a field of view of a listening user of a second client device executing the application;
modifying the audio data based at least in part on a set of rules and whether the object associated with the speaking user is within the field of view of the listening user; and
communicating the modified audio data to the listening user of the second client device.

2. The method of claim 1, wherein modifying the audio data comprises:
responsive to determining the object associated with the speaking user is not within the field of view of the listening user, diminishing the audio data.

3. The method of claim 1 or 2, wherein modifying the audio data comprises:
responsive to determining the object associated with the speaking user is within the field of view of the listening user, enhancing the audio data.

4. The method of any preceding claim, wherein modifying the audio data comprises:
identifying one or more noises included in the audio data; and
executing, on the one or more noises included in the audio data, one or more selected from the group consisting of: noise blocking, noise cancelling, noise masking, noise filtering, noise amplification, and noise spatialization.

5. The method of claim 4, wherein the set of rules comprises: enhancing the speech included in the audio data if one or more of: the speaking user is within the field of view of the listening user of the second client device, the speech is associated with a volume that is at least a threshold volume, one or more words associated with safety are included in the speech, a whitelist associated with the speaking user identifies the listening user, an additional object associated with the listening user is within a boundary around the object associated with the speaking user, and a gaze point of the speaking user matches a location of the additional object associated with the listening user.

6. The method of claim 5, wherein the gaze point of the speaking user is determined by the first client device.

7. The method of any of claims 4 to 6, wherein the set of rules comprises:
diminishing the speech included in the audio data if one or more of: the speaking user is not within the field of view of the listening user of the second client device, the speech is associated with a volume that is less than a threshold volume, a whitelist associated with the speaking user does not identify the listening user, an additional object associated with the listening user is outside a boundary around the object associated with the speaking user, and a gaze point of the speaking user does not match a location of the additional object associated with the listening user.

8. The method of any preceding claim, wherein modifying the audio data comprises:
identifying one or more noises included in the audio data;
sending a prompt to the second client device to select one or more options from a set of options for modifying each of the one or more noises included in the audio data;
receiving, from the second client device, the one or more options for modifying each of the one or more noises included in the audio data; and
modifying the audio data based at least in part on the one or more options received from the second client device.

9. The method of any preceding claim, wherein modifying the audio data is further based at least in part on one or more selected from the group consisting of: a set of preferences associated with the listening user, a setting associated with the application, and a predicted listening effort of the listening user.

10. The method of claim 9, wherein modifying the audio data comprises:
accessing a machine learning model, wherein the machine learning model is trained to predict a listening effort of the listening user by:
receiving a set of attributes associated with a plurality of actions of the listening user,
receiving, for each action of the plurality of actions, a label indicating a listening effort of the listening user, and
training the machine learning model based at least in part on the set of attributes and the label for each action of the plurality of actions; and
applying the machine learning model to a set of attributes associated with an action of the listening user to predict the listening effort of the listening user.

11. A computer-readable storage medium comprising stored instructions, the instructions when executed by a processor of a device, causing the device to carry out the method of any preceding claim.

12. A system comprising one or more processors and a memory comprising stored instructions, the instructions when executed by the one or more processors, cause the one or more processors to carry out the method of any of claims 1 to 10.

13. A computer program product comprising instructions which, when executed by a processor of a device, cause the device to carry out the method of any of claims 1 to 10.
